# EUROPÄISCHE PATENTSCHRIFT

(11) **EP 3 870 532 B1**
(45) Veröffentlichungstag und Bekanntmachung des Hinweises auf die Patenterteilung: **14.08.2024**
(21) Anmeldenummer: 19787195.7
(22) Anmeldetag: 10.10.2019
(51) Int. Cl.: B67C 3/00, B67C 3/28, G01F 23/284, G01S 13/88

(54) **FÜLLSYSTEM ZUM FÜLLEN VON BEHÄLTERN MIT EINEM FLÜSSIGEN FÜLLGUT SOWIE FÜLLMASCHINE**
FILLING SYSTEM FOR FILLING CONTAINERS WITH A FLUID FILLING MATERIAL AND FILLING MACHINE
SYSTÈME DE REMPLISSAGE POUR LE REMPLISSAGE DE RÉCIPIENTS AVEC UN PRODUIT DE REMPLISSAGE LIQUIDE ET MACHINE DE REMPLISSAGE

(30) Priorität: 23.10.2018 DE 102018126303
(43) Veröffentlichungstag der Anmeldung: 01.09.2021
(73) Patentinhaber: KHS GmbH, 44143 Dortmund (DE)
(72) Erfinder: CLÜSSERATH, Ludwig, 55543 Bad Kreuznach (DE); OHREM, Jochen, 55545 Bad Kreuznach (DE)
(86) Internationale Anmeldenummer: PCT/EP2019/077476
(87) Internationale Veröffentlichungsnummer: WO 2020/083654

(56) Entgegenhaltungen:
- EP-A1- 2 942 322
- EP-A2- 0 591 816
- WO-A2-01/63223
- DE-A1- 102008 008 715

## Beschreibung

Die Erfindung bezieht sich auf ein Füllsystem zum Füllen von Behältern mit einem flüssigen Füllgut gemäß Oberbegriff Patentanspruch 1 sowie auf eine Füllmaschine mit einer Vielzahl von Füllelementen an einem um eine vertikale Maschinenachse umlaufend antreibbaren Rotor gemäß Oberbegriff Patentanspruch 12.

Füllsysteme und Füllmaschinen zum Füllen von Behältern mit flüssigem Füllgut, insbesondere auch zum Druckfüllen sind in verschiedenen Ausführungen bekannt. Ferner können derartige Füllsysteme zur Ausführung unterschiedlicher Füllverfahren ausgebildet sein, insbesondere auch zum Druckfüllen, wobei bei diesen bekannten Verfahren der eigentlichen Füllphase, die z.B. aus wenigstens zwei Teilphasen in Form einer Schnellfüllphase und wenigstens einer Langsamfüllphase bestehen kann, zeitlich wenigstens eine Spülphase und/oder Vorspannphase vorausgeht, in der der Innenraum der Behälter mit einem Spülgas, d. h. Inertgas, gespült bzw. mit einem Spanngas (Inertgas) vorgespannt wird.

Mehr im Detail bezieht sich das Füllverfahren auf ein solches Füllverfahren, bei dem das in den Behälter strömende Füllgut unterhalb des eigentlichen Flüssigkeitsventils durch Leitelemente wie z.B. Ableitschirme, Drallkörper oder ähnliches an die Innenwandung des Behälters geleitet wird, worauf das Füllgut durch die Wirkung der Adhäsionskraft entlang der Innenwandung des Behälters in den Behälter strömt, und diesem somit bei nur geringer Schaumentwicklung füllt. Dabei ist wesentlich, dass der Behälter mit seiner Mündung dichtend gegen das Füllventil angepresst wird.

Die Füllung kann sowohl drucklos, also auch unter Druck erfolgen.

Bei der drucklosen Füllung weist der Behälter Umgebungsdruck auf, wobei ein Gasweg eine Verbindung zwischen dem Innenraum des Behälters und der Umgebung herstellt. Bevorzugt entweicht über diesen Gasweg auch das im Behälter enthaltene und durch das in den Behälter einströmende Füllgut verdrängte Gas in die Umgebung.

Erfolgt die Füllung unter einem vom Umgebungsdruck abweichenden Druck, so wird der Druck im Innenraum des Behälters durch Beaufschlagung mit einem Spanngas (Inertgas bzw. CO2-Gas) oder durch Beaufschlagung mit einem Unterdruck auf diesen, vom Umgebungsdruck abweichenden Druck eingestellt, welcher sowohl über, als auch unter dem Umgebungsdruck liegen kann.

In Dichtlage mit dem Füllelement befindlicher Behälter bedeutet im Sinne der vorliegenden Erfindung, dass der jeweils zu füllende Behälter in der dem Fachmann bekannten Art und Weise mit seiner Behältermündung dicht an das Füllelement bzw. an eine dortige, die wenigstens eine Abgabeöffnung umgebende Dichtung angepresst liegt.

Aus Umwelt-Gesichtspunkten, aber auch aus Kostengründen ist dabei angestrebt, derartige Kunststoffflaschen (PET-Flaschen) mehrfach zu benutzen. Hierfür ist es dann erforderlich, auch diese Flaschen aus Kunststoff in der üblichen Weise in Flaschenreinigungsmaschinen zu reinigen, was allerdings bei Flaschen aus Kunststoff bedingt durch die beim Reinigen notwendige Wärmebehandlung ein Schrumpfen zur Folge hat. Dieser Umstand bereitet u. a. beim Füllen Probleme, und zwar dahingehend, dass bei einem Füllen mit einem vorgegebenen Volumen sich in Abhängigkeit vom Grad der Schrumpfung unterschiedliche Füllhöhen ergeben. Dies kann zu Beanstandungen führen, und zwar wegen einer vermeintlichen Nichteinhaltung vorgeschriebener Mindestfüllmengen.

Hingegen schwanken die Leerflaschenvolumina von Glasflaschen herstellungsbedingt sehr häufig in einem recht großen Bereich, so dass es auch bei der Verwendung von Glasflaschen bei der als Volumenfüllung ausgebildeten Freistrahlfüllung zu unterschiedlichen Füllhöhen kommen kann.

Aus der auf die Anmelderin zurückgehenden Druckschrift DE 42 39 954 A1 ist beispielsweise ein Verfahren zum Füllen von Behältern bekannt geworden, bei dem während der Füllphase zunächst ein Füllen des jeweiligen Behälters mit einer vorgegebenen Menge bzw. mit einem vorgegebenen Volumen (Volumenfüllung) und anschließend in Abhängigkeit von einem Sensor-Signal ein Nachfüllen erfolgt, so dass in sämtlichen Behältern der Spiegel des flüssigen Füllgutes einer vorgegebenen Füllhöhe entspricht. Das Nachfüllen erfolgt dabei nur dann, wenn nach der Volumenfüllung die vorgegebene Füllhöhe nicht erreicht ist bzw. eine über ein vorgegebenes Maß hinausgehende 11546 WO/EP

Abweichung von einer Soll- Füllhöhe besteht. Dabei kann eine Sensoreinrichtung verwendet werden, die ortsfest an einer Bewegungsbahn vorgesehen ist, auf der die Behälter nach der Volumen-Füllung bewegt werden.

Ist die Füllmaschine dabei als eine Füllmaschine mit einem um eine vertikale Achse umlaufenden Rotor und mit einer Vielzahl von an diesem Rotor vorgesehenen Füllpositionen als Bewegungsbahn ausgebildet, so verschiebt sich bezogen auf den 360° Grad Rotor der Endpunkt des Füllprozesses in Abhängigkeit der aktuell gefahrenen Leistung (befüllte Behälter je Stunde) der Füllmaschine. Dabei läuft das flüssige Füllgut stets mit einem konstanten Volumenstrom (Liter je Stunde) in den jeweils zu befüllenden Behälter ein. Dreht der Rotor bei geringerer aktuell gefahrener Leistung der Füllmaschine langsamer, so ist der jeweilige zu befüllende Behälter bereits bei einem kleineren Drehwinkel an der jeweiligen Füllposition gefüllt, während bei einer höheren aktuell gefahrenen Leistung der Füllmaschine der Rotor schneller dreht und ein jeweiliger Behälter vergleichbaren Volumens erst bei einem größeren Drehwinkel gefüllt ist. Damit kann es bei dem vorbekannten Verfahren der DE 42 39 954 A1 ortsfest an einer Bewegungsbahn vorgesehener Sensoreinrichtung passieren, dass das Füllende der Füllphase bei einem Betreiben der Füllmaschine mit Minderleistung außerhalb des Erfassungsbereiches der Sensoreinrichtung zur Ermittlung der Sollfüllstandhöhe liegt und damit nicht erfasst werden kann.

Aus der Druckschrift WO 01/63223 A2 ist ein Füllsystem gemäß dem Oberbegriff des Anspruchs 1 bekannt und sind ein Verfahren und Vorrichtung zur berührungslosen Füllstandsmessung einer Flüssigkeit in einem Behälter durch Abstrahlen eines Sendesignals von oben auf die Flüssigkeitsoberfläche und Empfang des reflektierten Signals bekannt, wobei das reflektierte, empfangene Signal mit dem gesendeten Signal durch Korrelation verglichen wird, um den korrekten Empfangszeitpunkt und somit den Laufweg zu ermitteln.

Aufgabe der vorliegenden Erfindung ist es, ein Füllsystem zum Füllen von Behältern mit einem flüssigen Füllgut aufzuzeigen, mit dem die weiter oben genannten Nachteile vermieden werden und mit dem die Sollfüllstandshöhe unabhängig von der aktuell gefahrenen Leistung der Füllmaschine zuverlässig erfasst und der jeweilige Behälter mit einer ausreichenden Menge an flüssigem Füllgut gefüllt wird.

Die Aufgabe wird durch ein Füllsystem zum Füllen von Behältern mit einem flüssigen Füllgut gemäß den Merkmalen des unabhängigen Patentanspruchs 1 gelöst. Eine entsprechende Füllmaschine ist Gegenstand des nebengeordneten Patentanspruchs 12. Die jeweiligen Unteransprüche betreffen dabei besonders bevorzugte Ausführungsvarianten der Erfindung.

Gemäß einem ersten Aspekt bezieht sich die Erfindung auf ein Füllsystem zum Füllen von Behältern mit einem flüssigen Füllgut, gemäß Anspruch 1 und umfassend zumindest einen das Füllgut bereitstellenden Füllgutkessel sowie wenigstens ein Füllelement für die gesteuerte Abgabe des Füllgutes in den in Dichtlage an dem Füllelement angeordneten Behälter in einer Füllphase. Ferner weist das erfindungsgemäße Füllelement in einem Füllelementgehäuse einen von dem flüssigen Füllgut durchströmbaren Flüssigkeitskanal auf, in dem ein Flüssigkeitsventil vorgesehen ist, dessen Ventilkörper zum Öffnen und/oder Schließen des Flüssigkeitsventils entlang einer Füllelementachse gesteuert verschiebbar und an einem achsgleich mit der Füllelementachse angeordneten und als Ventilstößel wirkenden Gasrohr ausgebildet ist. Dabei ist unter Einbindung des Gasrohres zumindest ein Strömungsweg für ein flüssiges und/oder gasförmiges Medium ausgebildet, der zumindest während der Füllphase mit einem Innenraum des zu befüllenden Behälters in Verbindung steht. In dem Strömungsweg ist zumindest eine Antenne eines Radar-Füllstandmessgerätes zur Bestimmung der Füllhöhe des in dem Behälter abgefüllten flüssigen Füllgutes vorgesehen.

Vorteilhaft kann damit ein präzises Abfüllen von flüssigem Füllgut auch in unterschiedlich geformte und zueinander verschiedene Innenvolumen aufweisende Behälter gewährleistet werden. Dies deshalb, da die Bestimmung der Füllhöhe mittels des Radar-Füllstandmessgerätes nicht durch die Beschaffenheit des abzufüllenden Behälters beeinflusst wird. Und zwar deshalb nicht, da die von der Antenne ausgesandten und empfangenen Signale nicht durch das Behältnis hindurchgehen, sondern ungehindert durch die Behältermündung auf das abzufüllende Füllgut gelangen und von diesem wieder reflektiert werden. Die Antenne des nach dem Radarmessprinzip arbeitenden Radar-Füllstandmessgerätes ist dabei zum Senden und/oder Empfangen von Radarsignalen ausgebildet. Hierfür werden Sendesignale über eine Sendeeinrichtung der Antenne in Richtung des abgefüllten flüssigen Füllgutes gesandt, von diesem reflektiert und die solcherart reflektierten Antwortsignale von einer Empfängereinrichtung der Antenne empfangen und anhand der Signale der Füllstand des flüssigen Füllgutes bestimmt werden kann. Indem die Antenne in dem während des 11546 WO/EP

Füllvorgangs in Richtung des abzufüllenden Behälters direkt zugänglichen Strömungsweg vorgesehen ist, können die solcherart erzeugten und empfangen Signale der Antenne ungehindert und auf direktem Weg von der Antenne in Richtung des abgefüllten flüssigen Füllgutes gelangen, von diesem reflektiert und von der Antenne auch wieder empfangen werden.

Gemäß einer vorteilhaften Ausführungsvariante kann dabei vorgesehen sein, dass die Antenne zum Senden und/oder Empfangen von Radarsignalen ausgebildet ist.

Gemäß einer weiteren vorteilhaften Ausführungsvariante kann dabei vorgesehen sein, dass die Antenne dazu ausgebildet ist, über eine Sendeeinrichtung Sendesignale in Richtung des abgefüllten flüssigen Füllgutes über eine Mündungsöffnung des Behälters zu senden, und die von dem Füllgut reflektierten Antwortsignale mittels einer Empfängereinrichtung der Antenne zu empfangen und anhand der Signale den Füllstand des flüssigen Füllgutes zu bestimmen.

Gemäß einer nochmals weiteren vorteilhaften Ausführungsvariante kann dabei vorgesehen sein, dass die Sende- und Empfängereinrichtung der Antenne mit einer Hauptstrahlrichtung in dem Strömungsweg direkt sowie vorzugsweise lotrecht auf den Füllgutspiegel in dem jeweiligen Behälter gerichtet ist.

Gemäß einer nochmals weiteren vorteilhaften Ausführungsvariante kann dabei vorgesehen sein, dass die Antenne in dem Strömungsweg und die weiteren Elektronikkomponenten des Radar-Füllstandmessgerätes in einem gemeinsamen Gehäuse außerhalb des Füllelementgehäuses vorgesehen sind.

Gemäß einer nochmals weiteren vorteilhaften Ausführungsvariante kann dabei vorgesehen sein, dass die Antenne als Tropfenantenne ausgebildet ist.

Gemäß einer nochmals weiteren vorteilhaften Ausführungsvariante kann dabei vorgesehen sein, dass das Radar-Füllstandmessgerätes mit einer Frequenz in Hz größer als 80 GHz betreibbar ist.

Gemäß einer nochmals weiteren vorteilhaften Ausführungsvariante kann dabei vorgesehen sein, dass das Radar-Füllstandmessgeräte zusammen mit dem ersten und/oder zweiten Steuerventil sowie der Betätigungseinrichtung für den an dem Gasrohr ausgebildeten Ventilkörper und einer Regel- und Steuereinrichtung einen Regelkreis ausbildet.

Gemäß einer nochmals weiteren vorteilhaften Ausführungsvariante kann dabei vorgesehen sein, dass der Regelkreis dazu ausgebildet ist, mittels des Radar-Füllstandmessegerätes nach dem Radarmessprinzip eine Istfüllstandshöhe zu erfassen und mittels einer in der Regel- und Steuereinrichtung hinterlegten Sollfüllstandshöhe zu vergleichen und aus einer eventuellen Abweichung ein Signal zu erzeugen, welches die Regel- und Steuereinrichtung dem Füllelement zuführt, um ein an die Abweichung zwischen der Istfüllstandshöhe und der Sollfüllstandshöhe erforderliches Füllen des jeweiligen Behälters bis zum Erreichen der Sollfüllstandshöhe zu veranlassen. Insbesondere kann die Regel- und Steuereinrichtung des Regelkreises hierfür das erste und/oder zweite Steuerventil und/oder dritte Steuerventil sowie die Betätigungseinrichtung für den an dem Gasrohr ausgebildeten Ventilkörper steuern- und/oder regeln

Gemäß einer nochmals weiteren vorteilhaften Ausführungsvariante kann dabei vorgesehen sein, dass der Regelkreis dazu ausgebildet ist, in Abhängigkeit von der mittels des Radar-Füllstandmessegerätes nach dem Radarmessprinzip ermittelten Istfüllstandshöhe die Füllgeschwindigkeit zu steuern und/oder zu regeln. Beispielsweise kann in einer Maschinensteuerung ein Profil für die Sollfüllgeschwindigkeit hinterlegt sein, welches zumindest für einige Sollfüllstände jeweils eine zugeordnete Sollfüllgeschwindigkeit und/oder ein Sollöffnungsgrad des eigentlichen Flüssigkeitsventils des Füllventils hinterlegt sein. Beispielsweise kann für einen Istfüllstandshöhe zwischen 0 und 15 mm eine sehr niedrige Sollfüllgeschwindigkeit hinterlegt sein, und für eine Istfüllstandshöhe zwischen 15 und 180 mm eine sehr hohe Sollfüllgeschwindigkeit.

Gemäß einer nochmals weiteren vorteilhaften Ausführungsvariante kann dabei vorgesehen sein, dass zumindest die Antenne des Radar-Füllstandmessgeräts in dem Strömungsweg innerhalb des Gasrohres vorgesehen ist.

Gemäß einer nochmals weiteren vorteilhaften Ausführungsvariante kann dabei vorgesehen sein, dass die Antenne mit ihrer Hauptstrahlrichtung lotrecht auf den Füllgutspiegel des Behälters gerichtet in dem Gasrohr aufgenommen ist.

Erfindungsgemäß ist vorgesehen, dass die Antenne dabei im Bereich des unteren offenen Endes innerhalb des Gasrohres vorgesehen ist.

Gemäß einer weiteren, nicht erfindungsgemäßen Ausführungsvariante kann dabei vorgesehen sein, dass die Antenne näherungsweise mittig zwischen dem unteren offenen Ende und dem oberen offenen Ende innerhalb des Gasrohres vorgesehen ist.

Gemäß einer nochmals weiteren, nicht erfindungsgemäßen Ausführungsvariante kann dabei vorgesehen sein, dass die Antenne im Bereich des oberen offenen Endes innerhalb des Gasrohres vorgesehen ist.

Gemäß einer nochmals weiteren, nicht erfindungsgemäßen Ausführungsvariante kann dabei vorgesehen sein, dass die Antenne in dem Gasraum derart oberhalb des Gasrohres vorgesehen ist, dass die Hauptstrahlrichtung der Send- und Empfängereinrichtung innerhalb des Gasrohres entlang der Füllelementachse sowie lotrecht auf den Füllgutspiegel gerichtet ist.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren.

Obwohl manche Aspekte im Zusammenhang mit einer Füllmaschine beschrieben wurden, versteht es sich, dass diese Aspekte auch eine Beschreibung des entsprechenden Füllverfahrens darstellen, so dass ein Block- oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparates) wie z. B. einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Die Erfindung wird im Folgenden anhand der Figuren an Ausführungsbeispielen näher erläutert. Es zeigen:
- Fig. 1a: beispielhaft eine Ausführungsvariante eines vereinfacht und in Schnittdarstellung gezeigten Füllelementes eines Füllsystems gemäß der Erfindung;
- Fig. 1b: die in Figur 1a mit A eingekreisten Bereich des Füllelementes in einer vergrößerten Darstellung;
- Fig. 2: beispielhaft eine weitere, nicht erfindungsgemäße Ausführungsvariante eines vereinfacht und in Schnittdarstellung gezeigten Füllelementes eines Füllsystems;
- Fig. 3: beispielhaft eine nochmals weitere, nicht erfindungsgemäße Ausführungsvariante eines vereinfacht und in Schnittdarstellung gezeigten Füllelementes eines Füllsystems.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind.

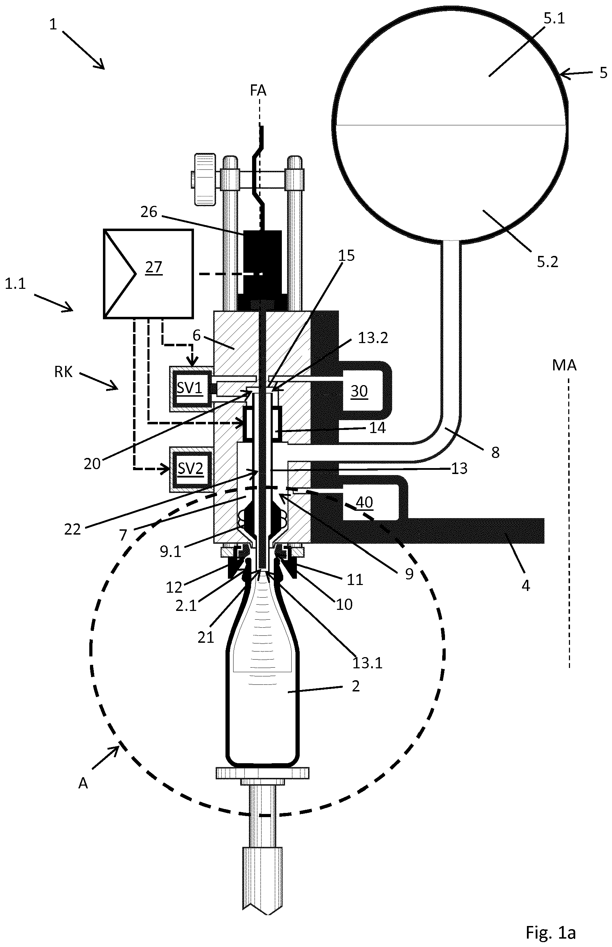

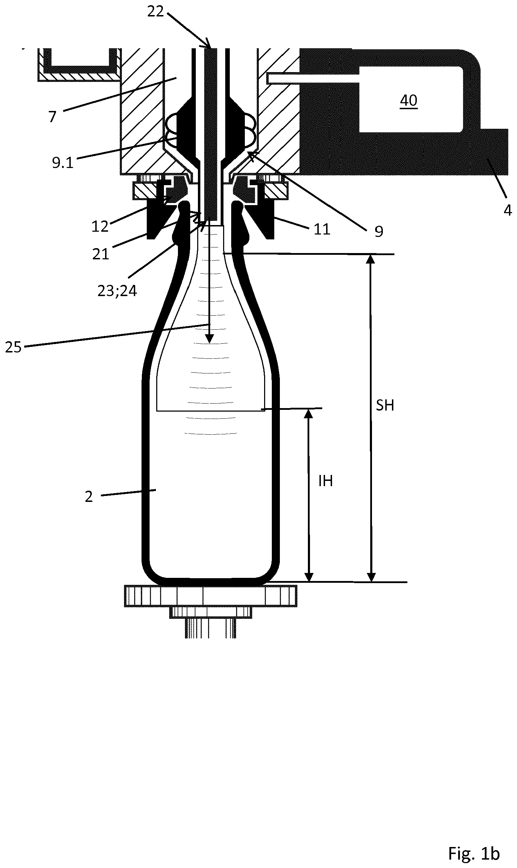

Das in den Figuren 1 bis 3 allgemein mit 1 bezeichnete Füllsystem ist Bestandteil einer Füllmaschine umlaufender Bauart zum Abfüllen eines flüssigen Füllgutes in Flaschen 2 oder dergleichen Behälter. Das Füllsystem 1 kann insbesondere zur Freistahlfüllung und/oder Füllung über die Behälterwandung und/oder für die Langrohrfüllung ausgebildet sein.

Das Füllsystem 1 umfasst hierfür u. a. Füllelemente 1.1, von denen in der Figuren 1 bis 3 nur exemplarisch ein Füllelement 1.1 gezeigt ist, und welches in gleichmäßigen Winkelabständen zusammen mit weiteren Füllelementen 1.1 am Umfang eines um eine vertikale Maschinenachse MA umlaufend antreibbaren Rotors 4 der Füllmaschine vorgesehen sind. An dem nur teilweise dargestellten Rotor 4 befindet sich ein für sämtliche Füllelemente 1.1 gemeinsamer Füllgutkessel 5, der beispielsweise als Ringkessel ausgebildet ist, und während des Füllbetriebes bis zu einem vorgegebenen Niveau niveaugesteuert mit dem Füllgut teilgefüllt ist. Neben dem Füllgutkessel 5 befinden sich an dem Rotor 4 auch für sämtliche Füllelemente 1.1 der Füllmaschine gemeinsame Ringkanäle 30 und 40.

Im Füllgutkessel 5 sind somit während des Füllbetriebes ein oberer Gasraum 5.1 und ein unterer Flüssigkeitsraum 5.2 ausgebildet. Dient das Füllsystem 1.1 zum Druckabfällen des flüssigen Füllgutes in die Behälter bzw. Flaschen 2, so ist der Gasraum 5.1 druckgesteuert mit einem unter einem Fülldruck stehenden Inertgas (CO2-Gas) beaufschlagt. Das flüssige Füllgut wird dem Füllgutkessel 5 über eine nicht nähergehend dargestellte Versorgungsleitung gesteuert zugeführt.

Die Ringkanäle 30 und 40 können je nach Füllverfahren unterschiedliche Funktionen erfüllen. Beispielsweise kann der Ringkanal 30 zur Führung des Intertgases unter Druck, insbesondere als Spanngaskanal, und/oder der Ringkanal 40 als Vakuumkanal zum Evakuieren oder Entlasten der Behälter 2 ausgebildet sein.

In einem Füllelementgehäuse 6 des Füllelementes 1.1 ist u. a. ein Flüssigkeitskanal 7 ausgebildet, der über eine Leitung 8 mit dem Flüssigkeitsraum 5.2 des Kessels 5 in Verbindung steht.

Ferner ist im Flüssigkeitskanal 7 ein Flüssigkeitsventil 9 vorgesehen, und zwar zur gesteuerten Abgabe des flüssigen Füllgutes über eine, eine vertikale Füllelementachse FA konzentrisch umschließende ringförmige Abgabeöffnung 10, die an der Unterseite des Füllelementes 1.1 von dem dortigen, offenen Ende des Flüssigkeitskanals 7 gebildet ist. An der Abgabeöffnung 10 ist eine Zentriertulpe 11 mit Dichtung 12 vorgesehen, die die Abgabeöffnung 10 ringförmig umschließt und gegen die der jeweilige Behälter 2 während des Füllens, insbesondere auch während des Druckfüllens mit seiner Behältermündung 2.1 angepresst ist, d. h. in Dichtlage anliegt.

Das Flüssigkeitsventil 9 besteht im Wesentlichen aus einem im Flüssigkeitskanal 7 angeordneten Ventilkörper 9.1, der mit einem an der Innenfläche des Flüssigkeitskanals 7 ausgebildeten Ventilsitz zusammenwirkt. Bei der dargestellten Ausführungsform ist der Ventilkörper 9.1 an einem achsgleich mit der Füllelementachse FA angeordneten und beidendig offenen Gasrohr 13 vorgesehen oder ausgebildet, welches zugleich als Ventilstößel zur Betätigung des Flüssigkeitsventils 9 dient und hierfür mit einer nur schematisch andeuteten Betätigungseinrichtung 14 zusammenwirkt, mit der das Gasrohr 13 und damit der Ventilkörper 9.1 zu Öffnen und Schließen des Flüssigkeitsventils 9 um einen vorgegebenen Hub axial in der Füllelementachse FA bewegbar sind.

Mehr im Detail ist also im Flüssigkeitskanal 7 in Strömungsrichtung des Füllgutes vor der Abgabeöffnung 10 das Flüssigkeitsventil 9 mit dem Ventilkörper 9.1 vorgesehen, wobei der Ventilkörper 9.1 mit einer Ventilfläche im Flüssigkeitskanal 7 zusammenwirkt und an dem achsgleich mit der vertikalen Füllelementachse FA angeordneten und als Ventilstößel wirkenden Gasrohr 13, insbesondere an einem im Querschnitt verbreiterten Abschnitt dieses Gasrohres 13, ausgebildet ist.

Mit dem unteren, offenen Ende 13.1 steht das Gasrohr 13 durch die Abgabeöffnung 10 hindurch über die Unterseite des Füllelementgehäuses 6 vor und reicht somit während des Füllens mit diesem Ende in den Innenraum, insbesondere den Kopfraum, des Behälters 2 hinein. Mit seinem oberen, ebenfalls offenen Ende 13.2 reicht das Gasrohr 13 in einen geschlossenen Gasraum 15 hinein.

Zum gesteuerten Öffnen und Schließen des Flüssigkeitsventils 9 ist die auf das Gasrohr 13 einwirkende Betätigungseinrichtung 14 vorgesehen, die das Rückgasrohr 13 und damit auch den daran ausgebildeten Ventilkörper 9.1 axial entlang der Füllelementachse FA bewegt, insbesondere heben und senken, kann. Letztlich wird damit Ventilkörper 9.1 geöffnet oder geschlossen.

Ferner ist in dem Füllelement 1.1 zumindest ein Strömungsweg 20 für ein flüssiges und/oder gasförmiges Medium ausgebildet, wobei der Strömungsweg 20 zumindest während der Füllphase mit dem Innenraum des zu befüllenden Behälters 2 in Verbindung steht. Vorzugsweise ist über den Strömungsweg 20 zumindest während der Füllphase aus dem Behälter 2 verdrängtes Rückgas abführbar und/oder verdrängtes Füllgut an den Füllgutkessel 5 zurückführbar und/oder zum Inertgasspülen über den Strömungsweg 20 Gas aus dem Behälter 2 zuführbar Der Strömungsweg 20 kann dabei als Gasweg und/oder als Gaskanalsystem ausgebildet sein. Mehr im Detail ist mittels des Strömungsweges 20 der Innenraum des Behälters 2 über das Gasrohr 13 unter Zwischenschaltung eines ersten Steuerventils SV1 mit dem Ringkanal 30 fluidisch verbindbar. In anderen Worten erstreckt sich also der Strömungsweg 20 von dem Ringkanal 30 über das erste Steuerventil SV1 und das Gasrohr 13, hier zwischen dem oberen und dem unteren offenen Enden 13.2, 13.1, in den Behälterinnenraum des Behälters 2.

Ferner können in dem Füllelement 1.1 weitere Gaswege oder Gaskanalsysteme ausgebildet sein, welche mehrere gesteuerte Gaswege mit einem zugehörigem zweiten Steuerventil SV2, welches gleich dem ersten Steuerventil SV1 ausgebildet ist, aufweisen. Insbesondere kann ein weiteres den Ringkanal 40 über das zweite Steuerventil SV2 mit dem Strömungsweg 20 verbindendes Gaskanalsystem vorgesehen sein, wie dies beispielsweise in der Figuren 1 angedeutet ist.

Dabei ist vorgesehen, dass in dem Strömungsweg 20 zumindest eine Antenne 21 eines Radar-Füllstandmessgerätes 22 zur Bestimmung der Füllhöhe des in dem Behälter 2 abgefüllten flüssigen Füllgutes vorgesehen ist.

Die Antenne 21 des nach dem Radarmessprinzip arbeitenden Radar-Füllstandmessgerätes 22 ist dabei zum Senden und/oder Empfangen von Radarsignalen ausgebildet. Hierfür werden Sendesignale über eine Sendeeinrichtung 23 der Antenne 21 in Richtung des abgefüllten flüssigen Füllgutes über die Mündungsöffnung 2.1 des Behälters 2 gesandt, von dem Füllgut reflektiert und die solcherart reflektierten Antwortsignale von einer Empfängereinrichtung 24 der Antenne 21 empfangen und anhand der Signale der Füllstand des flüssigen Füllgutes bestimmt. Insbesondere wird der Füllstand aus der jeweiligen Laufzeit der Signale von dem Radar-Füllstandmessgerät 22 ermittelt.

Dabei ist die Send- und Empfängereinrichtung 23, 24 der Antenne 21 mit einer Hauptstrahlungsrichtung 25 in dem Strömungsweg 20 direkt auf den Füllgutspiegel an flüssigem Füllgut in dem jeweiligen Behälter 2 gerichtet. Vorzugsweise ist die Hauptstrahlungsrichtung 25 zudem lotrecht zu dem Füllgutspiegel des jeweiligen Behälters 2 orientiert.

Indem die Antenne 21 in dem während des Füllvorgangs in Richtung des abzufüllenden Behälters 2 direkt zugänglichen Strömungsweg 20 vorgesehen ist, können die solcherart erzeugten und empfangen Signale der Antenne 21 ungehindert und auf direktem Weg von der Antenne 21 in Richtung des abgefüllten flüssigen Füllgutes gelangen, von diesem reflektiert und von der Antenne 21 auch wieder empfangen werden.

Es kann dabei vorgesehen sein, dass die Antenne 21 des Radar-Füllstandmessgerätes 22 in dem Strömungsweg 20 und die weiteren Elektronikkomponenten, wie beispielsweise Energieversorgungseinrichtung, Pulsgenerator oder Radarmessumformer, in einem Gehäuse 26 außerhalb des Füllelementgehäuses 6 vorgesehen, insbesondere an dem Füllelementgehäuse 6 angeordnet sind. In anderen Worten ist also die Antenne 21 getrennt von den weiteren Bauteilen und Komponenten des Radar-Füllstandmessgerätes 22 in dem Strömungsweg 20 vorgesehen und direkt oder indirekt mit den weiteren Bauteilen und Komponenten des Radar-Füllstandmessgerätes 22 verbunden.

Dabei kann die Antenne 21 eines nach dem Radar-Messprinzip arbeitenden Radar-Füllstandmessgerätes 22 ein nicht nähergehend dargestelltes Speiseelement sowie Linse als Sendeeinrichtung 23 aufweisen, wobei die Linse über das Speiseelement mit elektromagnetischer Strahlung beaufschlabbar ist und die Strahlung als Sendesignal über die Sendeeinrichtung 23 in Richtung Füllgutspiegels in Hauptstrahlungsrichtung 25 aussendet. Die Form der Antenne 21 ist derart gewählt, dass die ausgesandten Signale, also die elektromagnetische Strahlung, ein bestimmtes Abstrahlprofil aufweist.

Eine bevorzugte Ausführungsvariante sieht dabei vor, dass die Antenne 21 als Tropfenantenne ausgebildet ist. Eine Tropfenantenne zeichnet sich durch eine zur Wellenformung elektromagnetisch wirksame Linse aus, die im Sendebereich ellipsoidal geformt ist. Die Linse ist zu dem Speiseelement so angeordnet, dass die von der Linse abgestrahlte elektromagnetische Strahlung in der Hauptstrahlungsrichtung 25 der Antenne 21 eine im Wesentlichen ebene Phasenfront aufweist. Unter Hauptstrahlungsrichtung 25 wird vorliegend die Richtung verstanden, in die der wesentliche Teil der elektromagnetischen Strahlung abgestrahlt wird. Die Ausbildung einer Antenne 21 eines Radar-Füllstandmessgerätes 22 als Tropfenantenne ist aus der DE 10 2008 008 715 A1 bekannt. Insbesondere ist dem Fachmann dabei der Zusammenhang bekannt: Je höher die Frequenz in Hz mit der ein Radar-Füllstandmessgerät 22 betrieben wird, desto besser lässt sich der Strahl in bzw. entlang der Hauptstrahlungsrichtung 25 bündeln.

Vorzugsweise wird das Radar-Füllstandmessgerät 22 mit einer Frequenz in Hz größer als 80 GHz, insbesondere mit etwa 120 GHz, betrieben.

Vorteilhaft kann das Radar-Füllstandmessgeräte 22 zusammen mit dem ersten und/oder zweiten Steuerventil SV1, SV2 sowie der Betätigungseinrichtung 14 für den an dem Gasrohr 13 ausgebildeten Ventilkörper 9.1 und einer Regel- und Steuereinrichtung 27 einen Regelkreis RK ausbilden. Insbesondere ist der Regelkreis RK dazu ausgebildet, mittels des Radar-Füllstandmessegerätes 22 nach dem Radarmessprinzip eine Istfüllstandshöhe IH zu erfassen und mittels einer in der Regel- und Steuereinrichtung 27 hinterlegten Sollfüllstandshöhe SH zu vergleichen und aus einer eventuellen Abweichung ein Signal zu erzeugen, welches die Regel- und Steuereinrichtung 27 dem Füllelement 1.1 zuführt, um ein an die Abweichung zwischen der Istfüllstandshöhe IH und der Sollfüllstandshöhe SH erforderliches Füllen des jeweiligen Behälters 2 bis zum Erreichen der Sollfüllstandshöhe SH zu veranlassen. Insbesondere kann die Regel- und Steuereinrichtung 27 des Regelkreises RK hierfür das erste und/oder zweite Steuerventil SV1, SV2 sowie die Betätigungseinrichtung 14 für den an dem Gasrohr 13 ausgebildeten Ventilkörper 9.1 steuern- und/oder regeln.

Zumindest die Antenne 21 des Radar-Füllstandmessgeräts 22 ist in dem Strömungsweg 20 innerhalb des Gasrohres 13 vorgesehen. Mehr im Detail kann die Antenne 21 in dem Gasrohr 13 entlang der Füllelementachse FA aufgenommen, insbesondere angeordnet, sein. Dabei ist es vorteilhaft, wenn die Antenne 21 mit ihrer Hauptstrahlrichtung 25 lotrecht auf den Füllgutspiegel des Behälters 2 gerichtet in dem Gasrohr 13 aufgenommen ist.

Gemäß einer in Figur 1 dargestellten Ausführungsvariante ist kann die Antenne 21 dabei im Bereich des unteren offenen Endes 13.1 innerhalb des Gasrohres 13 vorgesehen. Vorteilhaft ist die Antenne 21 mit ihrer lotrecht auf den Füllgutspiegel gerichteten Hauptstrahlrichtung 25 der Send- und Empfängereinrichtung 23, 24 innerhalb des Gasrohres 13 zwischen 0cm und 5cm von dem unteren offenen Ende 13.1 entfernt vorgesehen.

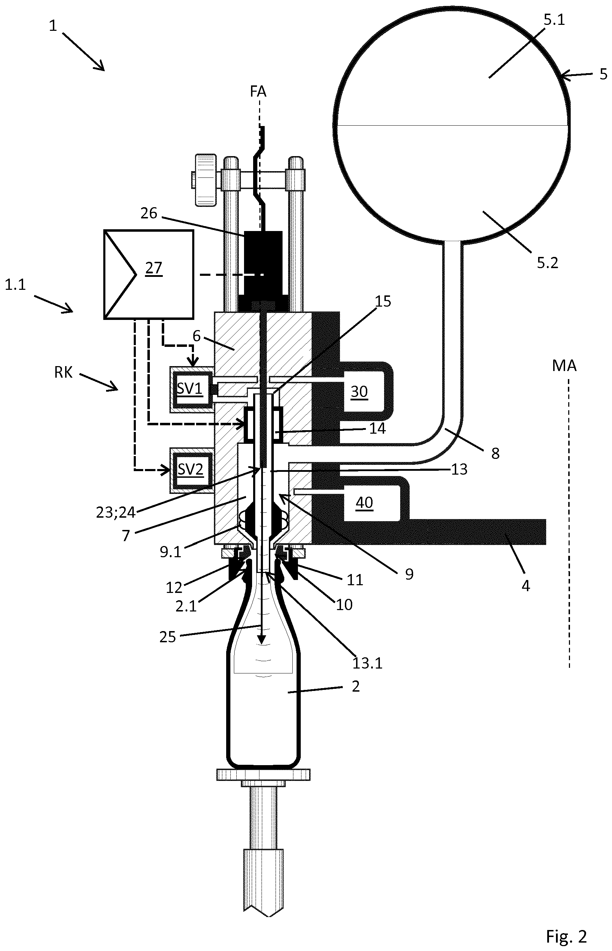

Gemäß einer in Figur 2 dargestellten Ausführungsvariante kann die Antenne 21 näherungsweise mittig zwischen dem unteren offenen Ende 13.1 und dem oberen offenen Ende 13.2 innerhalb des Gasrohres 13 vorgesehen sein.

Gemäß einer nicht dargestellten Ausführungsvariante kann die Antenne 21 im Bereich des oberen offenen Endes 13.2 innerhalb des Gasrohres 13 vorgesehen sein. Vorteilhaft ist die Antenne 21 mit ihrer lotrecht auf den Füllgutspiegel gerichteten Hauptstrahlrichtung 25 der Send- und Empfängereinrichtung 23, 24 innerhalb des Gasrohres 13 zwischen 0cm und 5cm von dem oberen offenen Ende 13.2 entfernt vorgesehen.

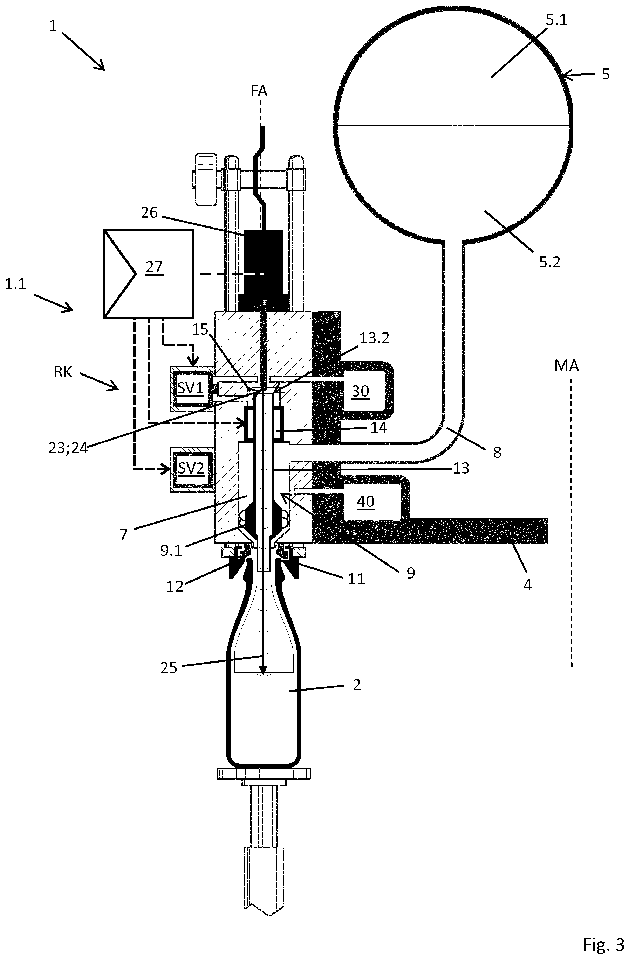

Gemäß einer in Figur 3 dargestellten Ausführungsvariante kann die Antenne 21 in dem Gasraum 15 derart oberhalb des Gasrohres 13 vorgesehen sein, dass die Hauptstrahlrichtung 25 der Send- und Empfängereinrichtung 23, 24 innerhalb des Gasrohres 13 entlang der Füllelementachse FA sowie lotrecht auf den Füllgutspiegel gerichtet ist.

### Bezugszeichenliste

- 1: Füllsystem
- 1.1: Füllelement
- 2: Behälter
- 2.1: Behältermündung
- 4: Rotor
- 5: Füllgutkessel
- 5.1: Gasraum
- 5.2: Flüssigkeitsraum
- 6: Füllelementgehäuse
- 7: Flüssigkeitskanal
- 8: Leitung
- 9: Flüssigkeitsventil
- 9.1: Ventilkörper
- 10: Abgabeöffnung
- 11: Zentriertulpe
- 12: Dichtung
- 13: Gasrohr
- 13.1: unteres Ende
- 13.2: oberes Ende
- 14: Betätigungseinrichtung
- 15: Gasraum

- 20: Strömungsweg
- 21: Antenne
- 22: Radar-Füllstandsmessgerät
- 23: Sendeeinrichtung
- 24: Empfängereinrichtung
- 25: Hauptstrahlrichtung
- 26: Gehäuse
- 27: Regel- und Steuereinrichtung

- 30: Ringkanal
- 40: Ringkanal
- RK: Regelkreis
- FA: Füllelementachse
- MA: Maschinenachse
- SV1: erstes Steuerventil
- SV2: zweites Steuerventil
- IH: Istfüllstandshöhe
- SH: Sollfüllstandshöhe

## Patentansprüche

1. Füllsystem zum Füllen von Behältern (2) mit einem flüssigen Füllgut, umfassend zumindest einen das Füllgut bereitstellenden Füllgutkessel oder ein Produktverteilerrohr (5), sowie wenigstens ein Füllelement (1.1) für die gesteuerte Abgabe des Füllgutes in den in Dichtlage an dem Füllelement (1.1) angeordneten Behälter (2) in einer Füllphase, wobei das Füllelement (1.1) in einem Füllelementgehäuse (6) einen von dem flüssigen Füllgut durchströmbaren Flüssigkeitskanal (7) aufweist, in dem ein Flüssigkeitsventil (9) vorgesehen ist, dessen Ventilkörper (9.1) zum Öffnen und/oder Schließen des Flüssigkeitsventils (9) entlang einer Füllelementachse (FA) gesteuert verschiebbar und an einem achsgleich mit der Füllelementachse (FA) angeordneten und als Ventilstößel wirkenden Gasrohr (13) ausgebildet ist, wobei unter Einbindung des Gasrohres (13) zumindest ein Strömungsweg (20) für ein flüssiges und/oder gasförmiges Medium ausgebildet ist, der zumindest während der Füllphase mit einem Innenraum des zu befüllenden Behälters (2) in Verbindung steht
wobei in dem Strömungsweg (20) zumindest eine Antenne (21) eines Radar-Füllstandmessgerätes (22) zur Bestimmung der Füllhöhe des in dem Behälter (2) abgefüllten flüssigen Füllgutes vorgesehen ist,
**dadurch gekennzeichnet, dass** die Antenne (21) im Bereich des unteren offenen Endes (13.1) innerhalb des Gasrohres (13) vorgesehen ist.

2. Füllsystem nach Anspruch 1, **dadurch gekennzeichnet, dass** die Antenne (21) zum Senden und/oder Empfangen von Radarsignalen ausgebildet ist.

3. Füllsystem nach Anspruch 1 oder 2, **dadurch gekennzeichnet, dass** die Antenne (21) dazu ausgebildet ist, über eine Sendeeinrichtung (23) Sendesignale in Richtung des abgefüllten flüssigen Füllgutes über eine Mündungsöffnung (2.1) des Behälters (2) zu senden, und die von dem Füllgut reflektierten Antwortsignale mittels einer Empfängereinrichtung (24) der Antenne (21) zu empfangen und anhand der Signale den Füllstand des flüssigen Füllgutes zu bestimmen.

4. Füllsystem nach Anspruch 3, **dadurch gekennzeichnet, dass** die Sende- und Empfängereinrichtung (23, 24) der Antenne (21) mit einer Hauptstrahlrichtung (25) in dem Strömungsweg (20) direkt sowie vorzugsweise lotrecht auf den Füllgutspiegel in dem jeweiligen Behälter (2) gerichtet ist.

5. Füllsystem nach einem der vorangehenden Ansprüche, **dadurch gekennzeichnet, dass** die Antenne (21) in dem Strömungsweg (20) und weitere Elektronikkomponenten des Radar-Füllstandmessgerätes (22) in einem gemeinsamen Gehäuse (26) außerhalb des Füllelementgehäuses (6) vorgesehen sind.

6. Füllsystem nach einem der vorangehenden Ansprüche, **dadurch gekennzeichnet, dass** die Antenne (21) als Tropfenantenne ausgebildet ist.

7. Füllsystem nach einem der vorangehenden Ansprüche, **dadurch gekennzeichnet, dass** das Radar-Füllstandmessgerätes (22) mit einer Frequenz in Hz größer als 80 GHz betreibbar ist.

8. Füllsystem nach einem der vorangehenden Ansprüche, **dadurch gekennzeichnet, dass** das Radar-Füllstandmessgeräte (22) zusammen mit einem ersten und/oder einem zweiten Steuerventil (SV1, SV2) sowie einer Betätigungseinrichtung (14) für den an dem Gasrohr (13) ausgebildeten Ventilkörper (9.1) und einer Regel- und Steuereinrichtung (27) einen Regelkreis (RK) ausbildet.

9. Füllsystem nach Anspruch 8, **dadurch gekennzeichnet, dass** der Regelkreis (RK) dazu ausgebildet ist, mittels des Radar-Füllstandmessegerätes (22) nach dem Radarmessprinzip eine Istfüllstandshöhe (IH) zu erfassen und mittels einer in der Regel- und Steuereinrichtung (27) hinterlegten Sollfüllstandshöhe (SH) zu vergleichen und aus einer eventuellen Abweichung ein Signal zu erzeugen, welches die Regel- und Steuereinrichtung (27) dem Füllelement (1.1) zuführt, um ein an die Abweichung zwischen der Istfüllstandshöhe (IH) und der Sollfüllstandshöhe (SH) erforderliches Füllen des jeweiligen Behälters (2) bis zum Erreichen der Sollfüllstandshöhe (SH) zu veranlassen.

10. Füllsystem nach einem der vorangehenden Ansprüche, **dadurch gekennzeichnet, dass** zumindest die Antenne (21) des Radar-Füllstandmessgeräts (22) in dem Strömungsweg (20) innerhalb des Gasrohres (13) vorgesehen ist.

11. Füllsystem nach einem der vorangehenden Ansprüche, **dadurch gekennzeichnet, dass** die Antenne (21) mit ihrer Hauptstrahlrichtung (25) lotrecht auf den Füllgutspiegel des Behälters (2) gerichtet in dem Gasrohr (13) aufgenommen ist.

12. Füllmaschine zum Füllen von Behältern (2) mit einem flüssigen Füllgut mit einer Vielzahl von an einem Umfang eines um eine vertikale Maschinenachse (MA) umlaufend antreibbaren Rotors (4) vorgesehenen Füllelementen (1.1) eines Füllsystems (1), **dadurch gekennzeichnet, dass** das Füllsystem (1) nach einem der vorhergehenden Ansprüchen ausgebildet ist.

## Claims

1. Filling system for filling containers (2) with a fluid filling material, comprising at least one filling material tank providing the filling material or a product distribution pipe (5), as well as at least one filling element (1.1) for the controlled distribution of the filling material into the container (2) arranged in the sealing position at the filling element (1.1) in a filling phase, wherein the filling element (1.1) comprises, in a filling element housing (6), a fluid channel (7) through which the fluid filling material can flow, in which a fluid valve (9) is provided, the valve body (9.1) of which can be shifted in a controlled manner along a filling element axis (FA) in order to open and/or close the fluid valve (9), and is formed on a gas pipe (13) which is arranged axially aligned with the filling element axis (FA) and acts as a valve tappet, wherein, with the inclusion of the gas pipe (13), at least one flow path (20) is formed for a fluid and/or gaseous medium, which during the filling phase is in connection with an interior of the container (2) which is to be filled,
wherein at least one antenna (21) of a radar fill level measuring device (22) is provided in the flow path (20) for determining the fill level of the fluid filling material filled in the container (2),
**characterised in that** the antenna (21) is provided in the region of the lower open end (13.1) inside the gas pipe (13).

2. Filling system according to claim 1, **characterised in that** the antenna (21) is configured for transmitting and/or receiving radar signals.

3. Filling system according to claim 1 or 2, **characterised in that** the antenna (21) is configured such as to transmit, by means of a signal device (23), transmitting signals in the direction of the fluid filling material which has been filled via a mouth opening (2.1) of the container (2), and to receive the response signals reflected from the filling material by means of a reception device (24) of the antenna (21), and, on the basis of the signals, to determine the filling level of the fluid filling material.

4. Filling system according to claim 3, **characterised in that** the transmitting and receiving devices (23, 24) of the antenna (21), with a main beam direction (25) in the flow path (20), is directed, directly as well as preferably perpendicularly, onto the filling material surface in the respective container (2).

5. Filling system according to any one of the preceding claims, **characterised in that** the antenna (21) is provided in the flow path (20), and further electronic components of the radar fill level measuring device (22) are provided in a common housing (26) outside the filling element housing (6).

6. Filling system according to any one of the preceding claims, **characterised in that** the antenna (21) is configured as a drip antenna.

7. Filling system according to any one of the preceding claims, **characterised in that** the radar fill level measuring device (22) can be operated at a frequency in Hz greater than 80 GHz.

8. Filling system according to any one of the preceding claims, **characterised in that** radar fill level measuring device (22), together with a first and/or a second control valve (SV1, SV2) and an actuating device (14), forms a control circuit (RK) for the valve body (9.1) formed at the gas pipe (13) and an instrumentation and control device (27).

9. Filling system according to claim 8, **characterised in that** the control circuit (RK) is configured such as to detect, by means of the radar fill level measuring device (22) according to the radar measuring principle, an actual fill level height (IH), and, by means of a reference fill level height (SH) stored in the instrumentation and control device (27), to compare the levels, and to generate from any possible difference a signal which the instrumentation and control device (27) then sends to the filling element (1.1) in order to arrange for the filling of the respective container (2) required by the difference between the actual fill level height (IH) and the reference level height (SH), until the reference level height (SH) is reached.

10. Filling system according to any one of the preceding claims, **characterised in that** at least the antenna (21) of the radar fill level measuring device (22) is provided in the flow path (20) inside the gas pipe (13).

11. Filling system according to any one of the preceding claims, **characterised in that** the antenna (21) is accommodated in the gas pipe (13), with its main beam direction (25) directed perpendicularly onto the filling material surface of the container (2).

12. Filling machine for filling containers (2) with a fluid filling material, with a plurality of filling elements (1.1) of a filling system (1) provided at the circumference of a rotor (4) which can be driven such as to rotate about a vertical machine axis (MA), **characterised in that** the filling system (1) is configured according to any one of the preceding claims.

## Revendications

1. Système de remplissage destiné à remplir des contenants (2) d'un produit de remplissage liquide, comprenant au moins une cuve de produit de remplissage fournissant le produit de remplissage ou un tube de distribution de produit (5), ainsi qu'au moins un élément de remplissage (1.1) pour la distribution commandée du produit de remplissage dans le contenant (2) disposé en position étanche sur l'élément de remplissage (1.1) dans une phase de remplissage, dans lequel l'élément de remplissage (1.1) présente dans un boîtier d'élément de remplissage (6) un canal de liquide (7) pouvant être traversé par le produit de remplissage liquide, dans lequel une soupape de liquide (9) est prévue, dont le corps de soupape (9.1) peut être coulissé de manière commandée le long d'un axe d'élément de remplissage (FA) pour ouvrir et/ou fermer la soupape de liquide (9) et est réalisé sur un tube à gaz (13) disposé sur le même axe que l'axe d'élément de remplissage (FA) et agissant en tant que coulisseau de soupape, dans lequel l'incorporation du tube à gaz (13) réalise au moins un trajet d'écoulement (20) pour un milieu liquide et/ou gazeux, qui est relié à un espace intérieur du contenant (2) à remplir au moins pendant la phase de remplissage,
dans lequel au moins une antenne (21) d'un appareil de mesure de niveau de remplissage radar (22) pour définir la hauteur de remplissage du produit de remplissage liquide transvasé dans le contenant (2) est prévue sur le trajet d'écoulement (20),
**caractérisé en ce que** l'antenne (21) est prévue à l'intérieur du tube à gaz (13) dans la zone de l'extrémité ouverte inférieure (13.1).

2. Système de remplissage selon la revendication 1, **caractérisé en ce que** l'antenne (21) est réalisée pour envoyer et/ou recevoir des signaux radar.

3. Système de remplissage selon la revendication 1 ou 2, **caractérisé en ce que** l'antenne (21) est réalisée pour envoyer par l'intermédiaire d'un système d'envoi (23) des signaux d'envoi en direction du produit de remplissage liquide transvasé par l'intermédiaire d'une ouverture d'embouchure (2.1) du contenant (2) et pour recevoir les signaux de réponse réfléchis par le produit de remplissage au moyen d'un système de réception (24) de l'antenne (21) et pour définir à l'aide des signaux l'état de remplissage du produit de remplissage liquide.

4. Système de remplissage selon la revendication 3, **caractérisé en ce que** le système d'envoi et de réception (23, 24) de l'antenne (21) est dirigé avec une direction de rayonnement principal (25) sur le trajet d'écoulement (20) directement ainsi que de préférence de manière perpendiculaire sur le niveau de produit de remplissage dans le contenant (2) respectif.

5. Système de remplissage selon l'une quelconque des revendications précédentes, **caractérisé en ce que** l'antenne (21) sur le trajet d'écoulement (20) et d'autres composants électroniques de l'appareil de mesure de niveau de remplissage radar (22) sont prévus dans un boîtier commun (26) à l'extérieur du boîtier d'élément de remplissage (6).

6. Système de remplissage selon l'une quelconque des revendications précédentes, **caractérisé en ce que** l'antenne (21) est réalisée en tant qu'antenne Drop.

7. Système de remplissage selon l'une quelconque des revendications précédentes, **caractérisé en ce que** l'appareil de mesure de niveau de remplissage radar (22) peut fonctionner à une fréquence en Hz supérieure à 80 GHz.

8. Système de remplissage selon l'une quelconque des revendications précédentes, **caractérisé en ce que** l'appareil de mesure de niveau de remplissage radar (22) réalise un circuit de régulation (RK) conjointement avec une première et/ou une deuxième soupape de commande (SV1, SV2) ainsi qu'avec un dispositif d'actionnement (14) pour le corps de soupape (9.1) réalisé sur le tube à gaz (13) et avec un dispositif de régulation et de commande (27).

9. Système de remplissage selon la revendication 8, **caractérisé en ce que** le circuit de régulation (RK) est réalisé pour détecter au moyen de l'appareil de mesure de niveau de remplissage radar (22) selon le principe de mesure radar une hauteur de remplissage réelle (IH) et pour comparer, au moyen d'une hauteur de remplissage théorique (SH) enregistrée dans le dispositif de régulation et de commande (27) et pour générer à partir d'un éventuel écart un signal, que le dispositif de régulation et de commande (27) amène à l'élément de remplissage (1.1) pour déclencher un remplissage du contenant (2) respectif exigé par l'écart entre la hauteur de remplissage réelle (IH) et la hauteur de remplissage théorique (SH) jusqu'à atteindre la hauteur de remplissage théorique (SH).

10. Système de remplissage selon l'une quelconque des revendications précédentes, **caractérisé en ce qu'**au moins l'antenne (21) de l'appareil de mesure de niveau de remplissage radar (22) est prévue sur le trajet d'écoulement (20) à l'intérieur du tube à gaz (13).

11. Système de remplissage selon l'une quelconque des revendications précédentes, **caractérisé en ce que** l'antenne (21) est logée dans le tube à gaz (13) de manière dirigée avec sa direction de rayonnement principale (25) de manière perpendiculaire au niveau de produit de remplissage du contenant (2).

12. Machine de remplissage destinée à remplir des contenants (2) d'un produit de remplissage liquide avec une pluralité d'éléments de remplissage (1.1), prévus sur une périphérie d'un rotor (4) pouvant être entraîné en rotation autour d'un axe de machine vertical (MA), d'un système de remplissage (1), **caractérisée en ce que** le système de remplissage (1) est réalisé selon l'une quelconque des revendications précédentes.
